# EUROPÄISCHE PATENTSCHRIFT

(11) **EP 4 320 017 B1**
(45) Veröffentlichungstag und Bekanntmachung des Hinweises auf die Patenterteilung: **10.12.2025**
(21) Anmeldenummer: 22708374.8
(22) Anmeldetag: 28.01.2022
(51) Int. Cl.: B60T 8/32, B60T 8/172, B60T 8/36, B60T 8/92

(54) **3/2 WEGEVENTIL-KONZEPT FÜR HYDRAULISCHE BETÄTIGUNGSSYSTEM**
3/2 WAY VALVE CONCEPT FOR HYDRAULIC ACTUATION SYSTEM
CONCEPT DE VANNE 3/2 VOIES POUR SYSTÈME D'ACTIONNEMENT HYDRAULIQUE

(30) Priorität: 07.04.2021 DE 202021105880 U
(43) Veröffentlichungstag der Anmeldung: 14.02.2024
(73) Patentinhaber: IPGate AG, 8808 Pfäffikon SZ (CH)
(72) Erfinder: VON ZANTEN, Anton, 71254 Ditzingen (DE); LEIBER, Heinz, 71739 Oberriexingen (DE)
(74) Vertreter: Lenzing Gerber Stute
(86) Internationale Anmeldenummer: PCT/EP2022/052023
(87) Internationale Veröffentlichungsnummer: WO 2022/214226

(56) Entgegenhaltungen:
- WO-A1-2016/146692

## Beschreibung

Die vorliegende Erfindung betrifft ein hydraulisches Betätigungssystem für ein Hydrauliksystem, insbesondere in Form eines Bremssystems, mit mindestens einem Hydraulikkreis, der mit mindestens einen hydraulischen Verbraucher, insbesondere in Form einer hydraulisch betätigten Radbremse, aufweist, und mit mindestens einer Druckerzeugungseinrichtung mit einer Kolbenpumpe oder einer Rotationspumpe zur Drucksteuerung bzw. -regelung, insbesondere zum Druckauf- und Druckabbau in dem mindestens einen Hydraulikkreis dient. Derartige hydraulische Betätigungssysteme sind hinlänglich bekannt. In der Kfz-Technik finden 3/2 Ventile vielseitige Anwendung, wie in der DE 10 2017000472 offenbart, wo ein 3/2-Wegeventil zur wahlweisenden Verbindung eines Bremskreise mit der Druckversorgung oder mit einem Tandem-Hauptbremszylinder dient. Durch den Einsatz eines 3/2-Wegeventils kann vorteilhaft ein Ventil eingespart werden, wenn zuvor nur 2/2-Wegeventile verwendet worden sind.

Das folgende Dokument WO 2016/146692 A1 kann auch als Stand der Technik zitiert werden. 1

In vielen Ventilanwendungen sind die Sicherheitsanforderungen für einen Ventilausfall hoch, da sie Auswirkungen auf die Bremswirkung und Pedalcharakteristik haben können.

### Aufgabe der Erfindung

Aufgabe der vorliegenden Erfindung ist es, ein gattungsgemäßes hydraulisches Betätigungssystem, insbesondere für ein Bremssystem, fehlersicherer und kostengünstiger auszubilden.

Diese Aufgabe wird erfindungsgemäß mit einem hydraulischen Betätigungssystem mit den Merkmalen des Anspruchs 1 gelöst. Weitere vorteilhafte Ausgestaltungen des Betätigungssystems nach Anspruch 1 ergeben sich durch die Merkmale der Unteransprüche.

Mit dem erfindungsgemäßen Betätigungssystem kann vorteilhaft sehr genau der Druck geregelt bzw. gesteuert werden.

Die Druckerzeugungseinrichtung kann vorteilhaft eine Kolbenpumpe aufweisen. In der Automobiltechnik gibt es ein großes Anwendungsspektrum für die erfindungsgemäßen Betätigungssysteme. Gegenüber Rotationspumpen bieten elektromotorisch betriebene Kolben-Zylinder-Systeme, mit Plunger- oder Doppelhubkolben große Vorteile bei der kontinuierlichen Mediumsförderung7 oder auch bei der gesteuerten Volumenförderung mittels Kolbenwegmessung oder Druckmessung, bei der z.B. durch gesteuertes bzw. geregeltes Verstellen des Kolbens ein ganz bestimmtes Volumen an Hydraulikmedium verstellt wird, womit z.B. anhand einer Druck-Volumenkennlinie ein vorgegebener Druck einstell- bzw. regelbar ist.

Besonders vorteilhaft ist es jedoch, wenn die Druckerzeugungseinrichtung einen Doppelhubkolben aufweist, so dass im Vor- und im Rückhub Hydraulikmedium gefördert werden kann, und dass jeder Arbeitsraum der Druckerzeugungseinrichtung über ein, insbesondere ihm zugeordnetes, 3/2-Wegeventil mit dem Vorratsbehältnis verbindbar ist. Mit dieser vorbeschriebenen Ventilschaltung kann z.B. jede der zurzeit geforderten Funktionen eines Bremssystems mit dem Kolben realisiert bzw. eingestellt werden. So ist es u.a. insbesondere auch möglich, den Doppelhubkolben der Druckerzeugungseinrichtung zu verstellen, ohne dabei Hydraulikmedium zu fördern, was allgemein auch als Leerhub ohne Volumenförderung in oder aus den Hydraulikkreisen bzw. Bremskreisen bezeichnet wird.

Es ist jedoch ebenso möglich, dass bei Verwendung einer Doppelhubkolbenpumpe nur einem Arbeitsraum bzw. Bremskreis ein 3/2-Wegeventil zugeordnet ist und dem anderen lediglich ein 2/2-Wegeventil. Bei dieser Anordnung ist es dann nur möglich, den einen Bremskreis mit dem Vorratsbehältnis zu verbinden, um Hydraulikmedium in diesen abzulassen bzw. von diesem aufzunehmen.

In einer weiteren möglichen Ausführungsform können die beiden Arbeitsräume der Druckerzeugungseinrichtung über ein einziges 3/2-Wegeventil mit dem Vorratsbehälter verbunden werden, wobei dann immer mindestens ein Arbeitsraum mit dem Vorratsbehälter hydraulisch in Verbindung ist. Sofern das 3/2-Wegeventil in einer Zwischenstellung mittels des Elektromagnetantriebes gehalten werden kann, ist es auch möglich, dass beide Arbeitsräume der Kolben-Zylinder-Einheit der Druckerzeugungseinrichtung gleichzeitig mit dem Vorratsbehälter hydraulisch verbunden sind.

Sofern das erfindungsgemäße hydraulische Betätigungssystem mit Doppelhubkolben für die Druckregelung eines Bremssystems verwendet wird, kann dieses das Hydraulikmedium sowohl im Vor- als auch im Rückhub in beide Bremskreise fördern. Bei einem Ausfall eines Bremskreises (Kreisausfall) kann durch die vorteilhafte Ventilschaltung weiterhin eine Druckregelung in dem anderen noch intakten Bremskreis mittels des Betätigungssystems erfolgen.

Das Bremssystem kann vorteilhaft einen Hauptbremszylinder aufweisen, der entweder als Tandem- oder Single-Hauptbremszylinder ausgebildet ist. Der Hauptbremszylinder weist somit mindestens einen Arbeitsraum auf, welcher über ein 3/2-Wegeventil entweder in der Rückfallebene mit einem Bremskreis oder im Normalfall mit einem Wegsimulator zur Einstellung eines Pedalgefühls verbindbar ist. Sofern der Hauptbremszylinder als Tandem-Hauptbremszylinder mit zwei Arbeitsräumen ausgebildet ist, so ist dessen einer Arbeitsraum wie vorbeschrieben über ein 3/2-Wegeventil mit Bremskreis und Wegsimulator verbindbar und der andere Arbeitsraum mittels eine 2/2-Wegeventils von dem anderen Bremskreis abkoppelbar bzw. in der Rückfallebene mit diesem verbindbar.

Wie bereits beschrieben, ermöglicht die Druckversorgung mit sogenanntem zweikreisigem Doppelhubkolben (DHK) eine kontinuierliche Volumenförderung. Der abwechselnd einkreisig fördernde Doppelhubkolben kann mit der erfindungsgemäßen Ventilschaltung durch Kolbenvor- und Kolbenrückhub das Volumen in die beiden Bremskreise verteilen. Gleichzeitig kann über ein die beiden Bremskreise miteinander verbindendes Kreistrennventil in dessen Offenstellung ein Druckausgleich zwischen den beiden Bremskreisen stattfinden.

Der Doppelhubkolben kann vorteilhaft zwei unterschiedlich große Wirkflächen im Kolbenvor- und Kolbenrückhub aufweisen. So beträgt in der Regel die wirksame Kolbenfläche im Kolbenrückhub nur 50% der wirksamen Kolbenfläche bei Kolbenvorhub, mit dem Vorteil, dass die Kolbenkraft und damit Motormoment, z.B. über einen Spindelantrieb, bei Kolbenrückhub nur 50% der Kolbenkraft des Kolbenvorhubs, bei gleichem Druck auf der Wirkfläche, beträgt. Dies wird vorteilhaft dazu genutzt, dass bei Kolbenrückhub, mit dem gleichen maximalen Motormoment der doppelte Maximaldruck, z.B. bis zu 200bar erreicht werden. Beim Kolbenvorhub hingegen dann nur bis 100bar. Damit ist die Hauptforderung, dass der Druckaufbau und Druckabbau im gesamten Druckbereich von 0 - 200bar mit präziser Druckregelung durch Kolbenvorhub und Kolbenrückhub bei jeder Stellung des Kolbens möglich ist, erfüllt.

Der Doppelhubkolben kann mit der erfindungsgemäßen Ventilschaltung vorteilhaft für ca. zwanzig verschiedene Operationen verwendet werden, wenn er diese ohne Kompromisse an Dynamik und Stellgenauigkeit durchführt werden sollen. Im Gegensatz zu den aus DE 10 20110830312 oder DE 10 2018221783 bekannten komplexen Ventilschaltungen, ist die erfindungsgemäße Ventilschaltung des erfindungsgemäßen hydraulischen Betätigungssystem deutlich einfacher, kostengünstiger und kleiner bauend.

Auch bei Ausfall eines Hydraulikkreises ist beim erfindungsgemäßen Betätigungssystem der andere Kreis noch einsatzbereit. Durch Vorsehen einer redundanten Motorwicklung wird ebenso eine höhere Ausfallsicherheit des Antriebes erreicht. Die erfindungsgemäße Ventilschaltung ist zudem flexibel anwendbar, so kann sie auch für die unterschiedlichsten Anforderungen der Hydraulikeinheit bei ABS, ESP und sonstigen Assistenzfunktionen verwendet werden.

Zur Erhöhung der Sicherheit kann in der Verbindungsleitung, welche die Druckversorgung mit dem Vorratsbehälter verbindet und in der ein 3/2-Wegeventil angeordnet ist, noch zusätzlich ein, insbesondere stromlos offenes, Sicherheitsabsperrventil angeordnet sein, welches insbesondere bei Fehlfunktion und/oder Undichtigkeit des 3/2-Wege-Ventils die hydraulische Verbindung zwischen Vorratsbehälter und 3/2-Wege-Ventil trennt. Damit kann vorteilhaft auch bei undichtem 3/2-Wegeventil durch Schließen des zusätzlichen Sicherheitsabsperrventils weiterhin mittels der Druckversorgung ein Druck in mindestens einer Radbremse aufgebaut bzw. verändert werden.

Nachfolgend wird anhand von Zeichnungen das erfindungsgemäße hydraulische Betätigungssystem und dessen Funktionsweise näher erläutert.

Es zeigen:
- Fig. 1:: Eine mögliche Ausführungsform des hydraulischen Betätigungssystem zur Druckversorgung für ein Bremssystem;
- Fig. 1a:: Ausschnittsvergrößerung der Druckerzeugungseinrichtung mit zwei 3/2-Wegeventilen;
- Fig. 1b:: Ausschnittsvergrößerung der Druckerzeugungseinrichtung mit nur einem 3/2-Wegeventil;
- Fig. 2a und 2b:: schematische Darstellungen des erfindungsgemäßen 3/2-Wegeventils im stromlosen (Fig. 2a) und bestromten Zustand (Fig. 2b);
- Fig. 3:: schematische Darstellung des Betätigungssystem gemäß Figur 1a;
- Fig. 4:: schematische Darstellung des Betätigungssystem gemäß Figur 1a beim Druckaufbau im Kolbenvorhub;
- Fig. 5:: schematische Darstellung des Betätigungssystem gemäß Figur 1a beim Druckabbau im Kolbenrückhub;
- Fig. 6:: zweite mögliche Ausführungsform des erfindungsgemäßen hydraulischen Betätigungssystems mit nur einem 3/2-Wegeventil, wobei stets ein Arbeitsraum der Druckerzeugungseinrichtung mit dem Vorratsbehälter in hydraulischer Verbindung ist;
- Fig. 7:: schematische Darstellung des Betätigungssystem gemäß Figur 6;
- Fig. 8:: Einsatz des Betätigungssystems gemäß Figur 6 in einem Bremssystem mit einem Hauptbremszylinder;
- Fig. 9:: Querschnitt durch eine mögliche Ausführungsform des erfindungsgemäßen 3/2-WEgeventils.

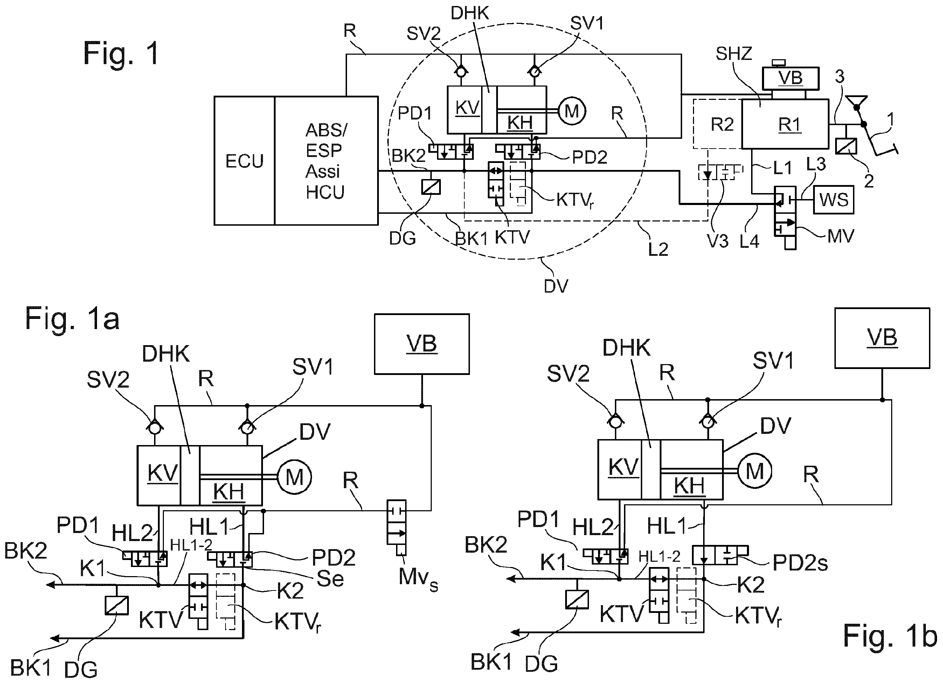

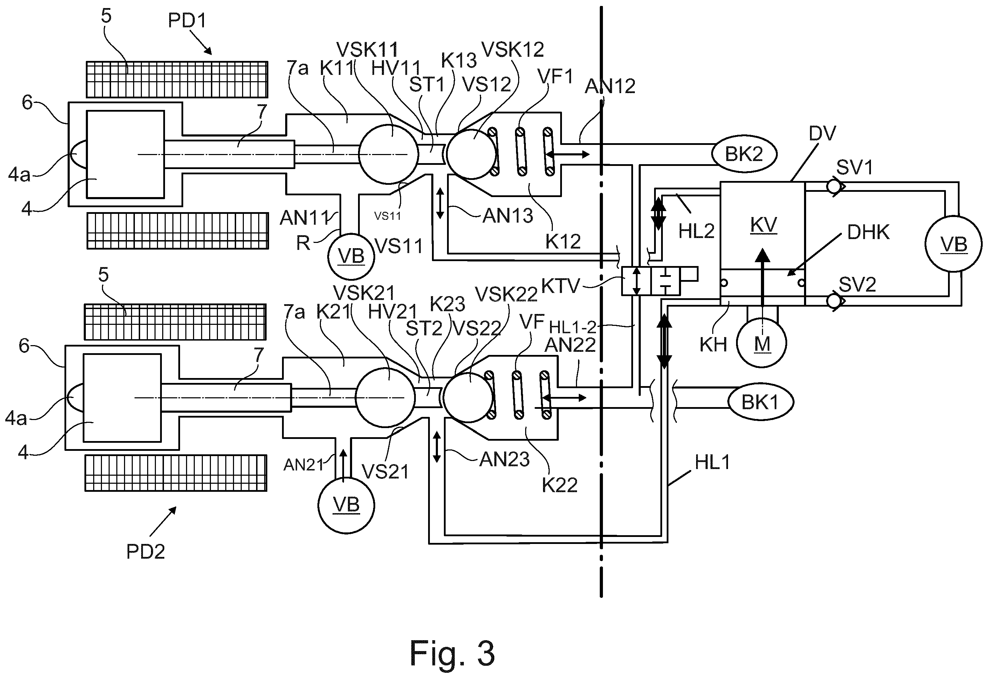

Die Figur 1 zeigt ein System mit Hauptbremszylinder HZ, z.B. Single-Hauptbremszylinder SHZ mit einem Arbeitsraum R1 oder Tandem-Hauptbremszylinder THZ mit zwei Arbeitsräumen R1 und R2, zusammen mit einem Vorratsbehälter VB und Pedalwegsensor 2. Im Fall des Single-Hauptbremszylinder SHZ führt eine Hydraulikleitung L1 über ein 3/2-Wegeventil MV zur Druckversorgung DV und zum Bremskreis BK1. Über das 3/2-Wegeventil MV ist der Arbeitsraum R1 wahlweise über Hydraulikleitung L3 mit dem Wegsimulator WS oder in der unbestromter Normalstellung mit dem Bremskreis BK1 verbunden. Die Hydraulikleitung L4 führt direkt an das 3/2-Wegeventil PD2 und über das Kreistrennventil KTV zum Bremskreis BK2. Der Arbeitsraum KV der Druckerzeugungseinrichtung DV ist über das 3/2-Wegeventil PD1 entweder mit dem zweiten Bremskreis BK2 oder dem Vorratsbehälter über die Rückleitung R verbunden. Die 3/2-Wegeventile PD1 und PD2 sind die Hauptkomponenten des Doppelhubkolbens DHK die in den Fig. 3-5 detailliert beschrieben sind. Die beiden Kreise der Druckversorgung DV führen zur Hydraulikeinheit HCU für ABS, ESP und Assistenzfunktionen, die von der Druckversorgung DV mit Druck versorgt werden. Dabei kann die Druckerzeugungseinrichtung nicht nur zum Druckaufbau, sondern auch zum Druckabbau genutzt werden.

Die Figur 1a zeigt das Betätigungssystem gem. Figur 1 alleine, wobei jedem Arbeitsraum KV, KH jeweils ein 3/2-Wegeventil zugeordnet ist. In der Rücklaufleitung R zum Vorratsbehälter VB ist ein stromlos geschlossenes 2/2 Absperrventil MVs angeordnet, welches im Normalfall geöffnet ist, und welches wirksam wird im Fehlerfall des undichten Ventilsitzes Se eines der Ventile PD1 und PD2. In diesem Fehlerfall wird das Ventil MVs geschlossen. Dies ist der Fall, wenn im nicht bestromten Zustand Leckfluss im Ventil PD1 oder PD2 entsteht und in die Rücklaufleitung R fließt. Dies kann z.B. über die zusätzliche Volumenaufnahme des Bremskreises BK2 bzw. BK1 mittels pV-Kennlinie oder über eine unbeabsichtigte Druckänderung in Bremskreis BK2 bzw. BK1 erkannt werden. Das Ventil MVs kann, muss aber nicht vorgesehen werden.

Die Figur 1b zeigt eine alternative Ausführungsform, bei der das zweite 3/2-Wegeventil PD2 durch ein 2/2-Wegeventil ausgetauscht ist, so dass der Arbeitsraum KH nicht mehr mit dem Vorratsbehälter VB verbindbar ist.

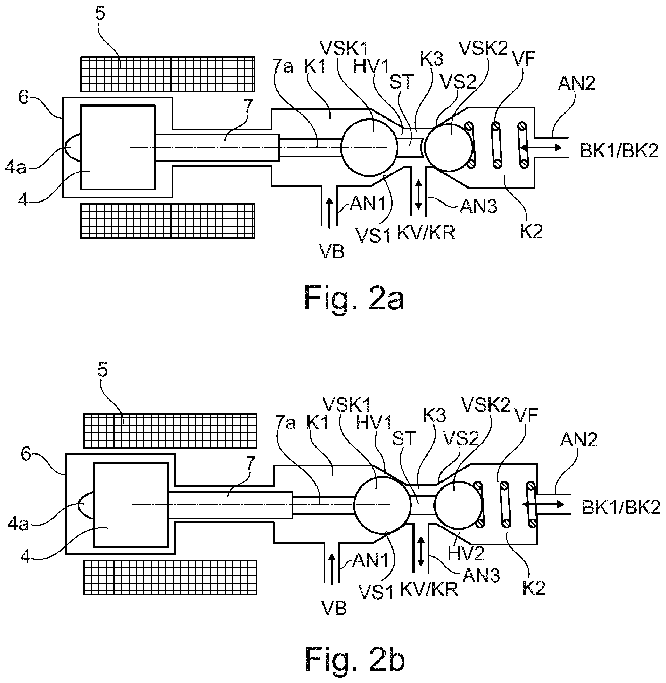

Die Figur 2a zeigt eine schematische Darstellung einer möglichen Ausführungsform eines erfindungsgemäßen 3/2-Wegeventils MV für das erfindungsgemäße Bremssystem. Das 3/2-Wegeventil MV weist eine Erregerwicklung 5 auf, die um ein Magnetjoch 6 angeordnet ist, in welchen der Magnetanker 4 in axialer Richtung zum Bolzen 7, 7a verstellbar ist. Am linken Ende des Magnettankers 4 ist ein Anschlagelement 4a eingeordnet, welches in dem in Figur 2a dargestellten nicht bestromten zweiten Schaltzustand des Ventils MV an die Innenwandung des Magnetjochs 6 anstößt. Am rechten Ende des Verbindungsbolzen 7, 7a ist der erste Ventilschließkörper VSK1 angeordnet, welcher mit dem Verbindungsbolzenende 7a fest verbunden ist. Der erste Ventilschließkörper VSK1 wirkt zusammen mit dem ersten Ventilsitz VS1, welcher Bestandteil des Magnetjochs 6 sein kann. Das Magnetjoch 6 bildet im Bereich des Bolzenabschnitts 7a eine erste Ventilkammer K1, die über einen hydraulischen Kanal mit dem ersten Ventilanschluss ein AN1 für den Anschluss des Bremskreises BK1 in Verbindung ist.

Das 3/2-Wegeventil MV weist zudem eine zweite Ventilkammer K2 auf, in der die Ventilfeder VF sowie ein zweiter Ventilschließkörper VSK2 angeordnet ist.

Die zweite Ventilkammer K2 ist über einen hydraulischen Kanal mit dem zweiten Ventilanschluss AN2, an den der Wegsimulator WS angeschlossen ist, verbunden. Die zweite Ventilkammer K2 bildet mit ihrer linken Seite den zweiten Ventilsitz VS2 des Ventils MV, welcher mit dem zweiten Ventilschließkörper VSK2 zusammenwirkt. Zwischen den beiden Ventilsitzen VS1 und VS2 ist eine dritte Ventilkammer K3 angeordnet die mit dem dritten Ventilanschluss AN3 für den Hauptbremszylinder SHZ bzw. THZ verbunden ist. An der dem Bolzen 7, 7a abgewandten Seite des ersten Ventilschließkörpers VSK1 ist ein Stößel ST angeformt oder befestigt, der von seiner Länge so dimensioniert ist, dass er den ersten Ventilsitz VS1 sowie die dritte Ventilkammer K3 durchgreift und mit seinem freien Ende auf den zweiten Ventilschließkörper VSK2 im bestromten Zustand des 3/2-Wegeventils MV wirken kann. In Figur die Druckversorgungseinrichtung mit dem zweiten Bremskreis BK2 verbunden ist.

Die Figur 2b zeigt den "bestromten" Zustand des Magnetventils MV, bei dem der Anker durch das Magnetfeld der Erregerspule nach rechts verstellt ist, wodurch der erste Ventilschließkörper VSK1 nach rechts und mit dem Stößel ST gegen den zweiten Ventilschließkörper VSK2 drückt und diesen entgegen der Federkraft der Ventilfeder VF weg von dem zweiten Ventilsitz VS2 drückt, wodurch nunmehr die Druckversorgungseinrichtung DV mit dem Vorratsbehälter VB in Verbindung ist. Die hydraulische Verbindung HV1 zwischen der ersten Ventilkammer K1 und der dritten Ventilkammer K3 ist dabei geöffnet, womit der Arbeitsraum der Druckerzeugungseinrichtung DV mit dem Vorratsbehälter VB verbunden ist und der Bremskreis abgekoppelt ist.

Die Dimensionierung der Ventilfeder VF bestimmt dabei den Öffnungsdruck in der Rückfallebene, z.B. bei Ausfall des ersten Bremskreises oder der Druckversorgungseinrichtung DZ. Hier fordert der Gesetzgeber, dass mit einer Fußkraft auf das Bremspedal 1 von 500N eine Fahrzeugverzögerung von 0,24g erzeugbar ist. Mit einer Dimensionierung der Ventilfeder auf 75bar Öffnungsdruck im Hauptbremszylinder kann nahezu der 3-fache Verzögerungswert erreicht werden.

Die Ventilfeder VF sollte so dimensioniert sein, dass der Magnetanker 4 sicher zurückgestellt wird und der Ventilschließkörper VSK sicher abdichtend gegen den ersten Ventilsitz VS1 gedrückt wird.

Fig. 3 zeigt die Anschlüsse der zwei 3/2-Wegeventile PD1 und PD2 an den Doppelhubkolben DHK. In der dargestellten unbestromten Ruhestellung werden bei beiden 3/2-Wegeventilen PD1 und PD2 die Ventilschließkörper VSK11 und VSK21 gegen die jeweiligen Ventilsitze VS11 und VS21 gedrückt, womit die hydraulische Verbindung zwischen den Anschlüssen AN11 und AN13 bzw. AN21 und AN23 geschlossen ist. Bei Druck in den Bremskreisen BK1 bzw. Bremskreis BK2 wirkt durch das auf die Ventilschließkörper VSK11 und VSK21 wirkende Hydraulikmedium eine zusätzliche Kraft in Schließrichtung.

Die im Kolbenvorhub wirkende Kammer KV ist über die Hydraulikleitung HL2 an den mittigen dritten Ventilanschluss AN13 des ersten 3/2-Wegeventils PD1 angeschlossen, wohingegen die im Kolbenrückhub wirkende Kammer KH über die Hydraulikleitung HL1 mit dem mittleren dritten Ventilanschluss AN23 des zweiten 3/2-Wegeventils PD2 verbunden ist.

Die jeweils zweiten Ventilanschlüsse AN12 und AN22 sind an die Bremskreise BK2 und BK1 angeschlossen. Die Bremskreise BK1 und BK2 sind wiederum durch ein stromlos offenes Kreistrennventil KTV miteinander verbunden bzw. im bestromten Zustand voneinander getrennt. Zum Druckauf- und Druckbbau bewegt sich der Doppelhubkolben DHK mit Vor- oder Rückhub. Dabei unterstützt der in der Leitung/Ventil wirksame Druck die Ventilöffnung an den beiden Ventilsitzen.

Das Kreistrennventil KTV wird bei Ausfall eines Bremskreises BK1 oder BK2 geschlossen. Zur Absicherung eines Doppelfehlers: Bei Ausfall eines Bremskreises BK1 oder BK2 und gleichzeitigem Ausfall des Kreistrennventils KTV, kann dieses Kreistrennventil KTV auch redundant ausgebildet werden, z.B. durch ein in Reihe geschaltetes weiteres Kreistrennventil KTVᵣ.

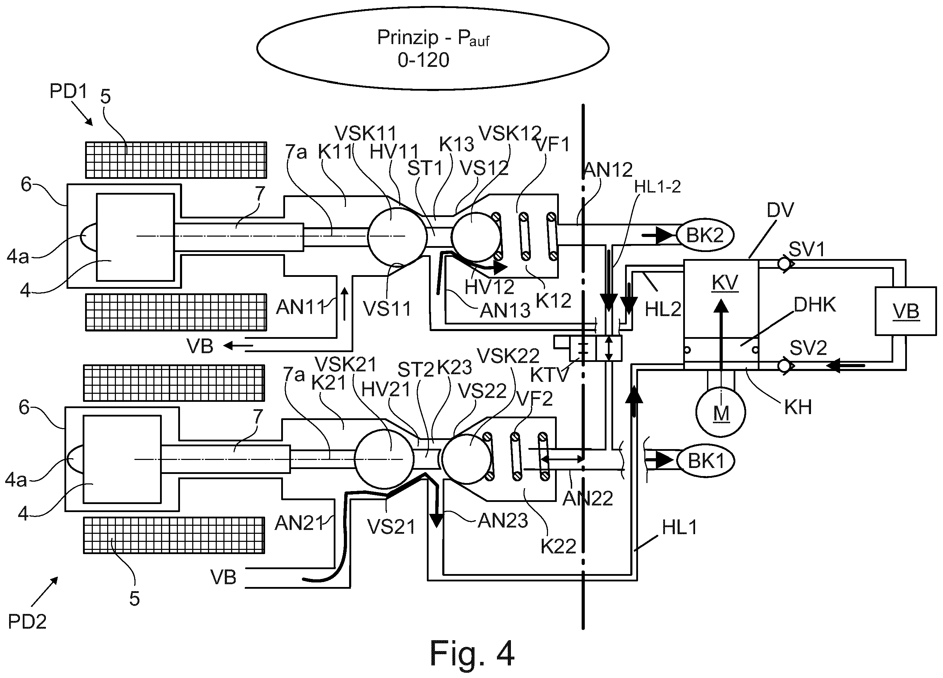

Fig. 4 zeigt die Anordnung bei der Funktion Druckaufbau mit dem Doppelhubkolben DHK bei Kolbenvorhub. Hierbei bewegt sich der Kolben im Bild nach oben, der Volumenstrom wird über das bestromte 3/2-Wegeventil PD1 mit offenem Ventilsitz VS22 und geschlossenem Ventilsitz VS12 in den Bremskreis BK2 und über das Kreistrennventil KTV in den Bremskreis BK1 geleitet. Bei der Kolbenvorhubbewegung saugt der Doppelhubkolben über den offenen Ventilsitz VS21 des Ventils PD2 und über das Saugventil SV2 Volumen aus dem Vorratsbehälter VB an.

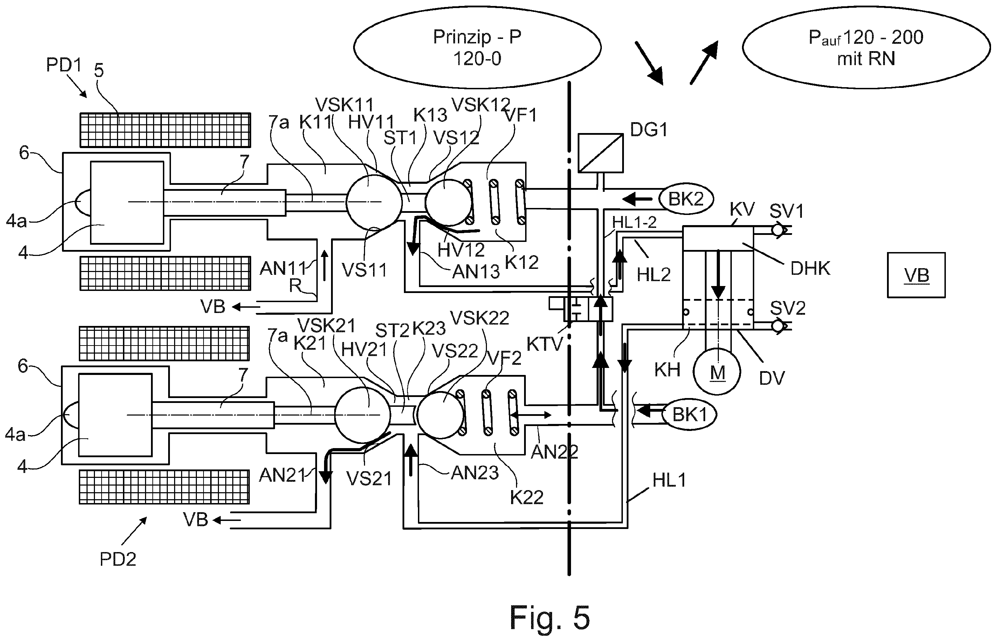

Fig. 5 zeigt den Druckabbau bei Rückhub des Doppelhubkolbens DHK bei offenem Ventilsitz VS12. Auch hier wirkt wieder der Druckausgleich zwischen den beiden Bremskreisen BK1 und BK2 über das Kreistrennventil KTV. Am Ventilsitz VS12 und VS22 wirkt der Staudruck durch die Druckabbaugeschwindigkeit. Dieser kann über das Motormoment oder über Strom oder Druck vom Druckgeber gemessen und geregelt oder gesteuert werden.

Aus dieser Kolbenposition vor dem Doppelhubkolbenrückhub kann auch der Druckaufbau in den hohen Druckbereich bis z.B. 200 bar eingestellt werden. Hierbei wird das 3/2-Wegeventil PD2 bestromt, wodurch der Ventilsitz VS21 geschlossen und der Ventilsitz VS22 geöffnet wird. Dadurch steigt der Druck in Bremskreis BK1 und über das Kreistrennventil KTV auch in Bremskreis BK2. Bei der Kolbenrückhubbewegung saugt der Doppelhubkolben über den offenen Ventilsitz VS1 und über das Saugventil SV1 und VS11 von PD1 Volumen aus dem Vorratsbehälter VB an.

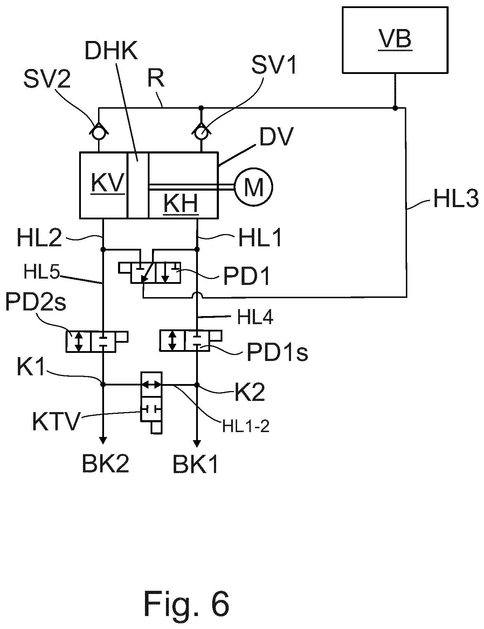

Die Figur 6 zeigt eine weitere mögliche Ausführungsform des erfindungsgemäßen Betätigungssystems, wobei hier nur ein 3/2-Wegeventil PD1 vorgesehen ist, mit dem entweder der erste Arbeitsraum KV oder der zweite Arbeitsraum KH mit dem Vorratsbehälter VB über die Hydraulikleitung HL3 verbunden wird. Das gesteuerte Schaltventil PD1s dient zur wahlweisen hydraulischen Verbindung der ersten Hydraulikleitung HL1 bzw. der zweiten Arbeitskammer KH mit einem ersten Hydraulikkreis BK1. Ein zweites gesteuertes Schaltventil PD2s dient wiederum zur wahlweisen hydraulischen Verbindung der zweiten Hydraulikleitung HL2 bzw. der ersten Arbeitskammer KV mit einem zweiten Hydraulikkreis BK2, wobei insbesondere die zweite Hydraulikleitung HL2 über eine fünfte Hydraulikleitung HL5 mit dem zweiten Hydraulikkreis BK2 verbunden ist, wobei das zweite gesteuerte Schaltventil PD2s zur wahlweisen Absperrung oder Öffnung der fünften Hydraulikleitung HL5 dient. Über ein drittes gesteuertes Kreistrennventil KTV können beide Hydraulikkreise BK1, BK2 hydraulisch miteinander verbunden bzw. voneinander getrennt werden.

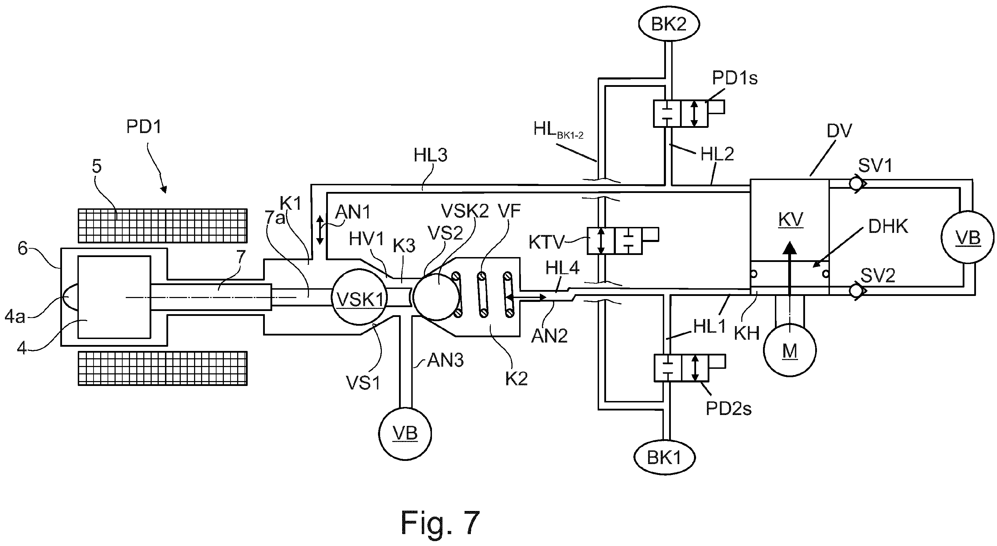

Die Figur 7 zeigt den Schematischen Aufbau, der Schaltung gemäß Figur 6.

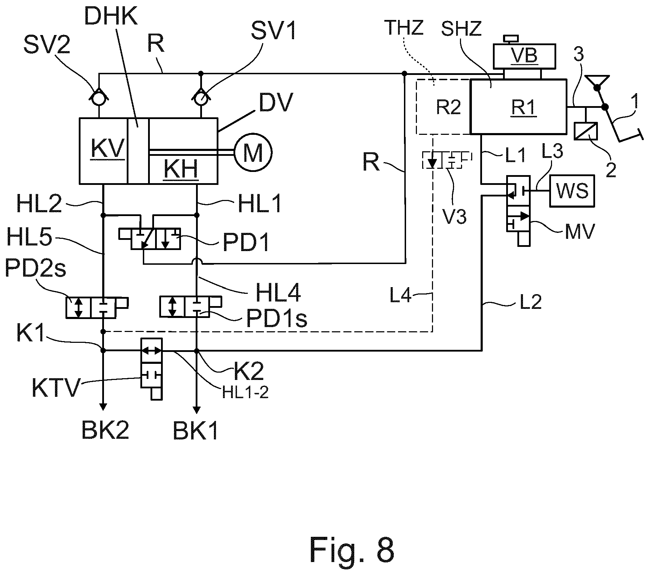

Figur 8 zeigt das erfindungsgemäße Betätigungssystem gemäß der Figuren 6 und 7 im Einsatz bei einem Bremssystem mit einem Hauptbremszylinder, welcher als Single-Hauptbremszylinder SHZ mit nur einem Arbeitsraum R1 oder als Tandem-Hauptbremszylinder THZ mit zwei Arbeitsräumen R1 und R2 ausgebildet sein kann. Der Anschluss des Hauptbremszylinders entspricht dabei im Wesentlichen dem in Figur 1 beschriebenen.

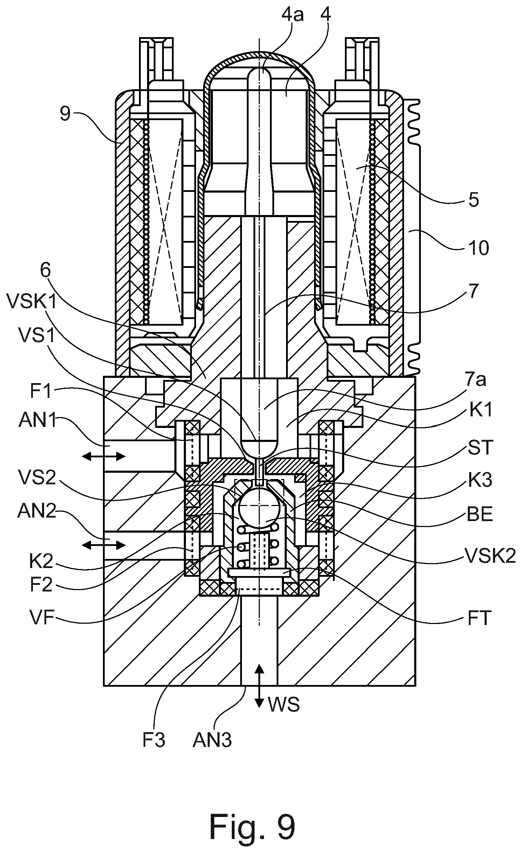

Die Figur 9 zeigt einen möglichen konstruktiven Aufbau des 3/2-Wegeventils. Der obere Teil, bestehend aus Magnetanker 4, Erregerspule 5, Magnetjoch 6, entspricht dabei dem Aufbau eines Standard 2/2-Wege-Einlassventils für ein Antiblockiersystem (ABS). Aus diesem Grund wird hier auf eine detaillierte Beschreibung verzichtet und nur der untere Teil, welcher eine Umwandlung des 2/2-Wegeventils in ein 3/2-Wegeventils bewirkt, eingehend beschrieben.

Das Magnetjoch 6 dient zur Führung für den Bolzen 7, 7a, welcher mit dem ersten Ventilschließkörper VSK1 verbunden ist. Der Bolzen 7 kann im Vergleich zur Standardausführung des 2/2-Wege-Einlassventils im Durchmesser kleiner gestaltet werden, was die effektive Pohlfläche vergrößert. Dies ermöglicht auch den Einbau eines Permanentmagneten PM im Joch 6 zur Kraftunterstützung der Rückstellfeder VF, wie in Figur 6 beschrieben, um kleinere Verlustleistungen zu erreichen. Der erste Ventilschließkörper VSK1 wirkt zusammen mit dem ersten Ventilsitz VS1 und ist halbkugelförmig ausgestaltet, um eine sichere Dichtwirkung zu erzielen bzw. zu gewährleisten. Der erste Ventilsitz VS 1 ist im Magnetjoch 6 angeordnet. Der erste Ventilsitz VS1 kann jedoch auch im Magnetjoch 6 integriert oder über eine eingebördelte Platte ausgeführt werden. Ein Stößel ST ist am ersten Ventilschließkörper VSK1 angeformt oder aber mit dem Bolzen 7a verbunden. Der Stößel durchgreift den ersten Ventilsitz VS1 und wirkt auf den zweiten Ventilschließkörper VSK2, welche als Kugel ausgebildet ist und mit dem zweiten Ventilsitz VS2 zusammenwirkt.

Wie dargestellt, kann der zweite Ventilsitz VS2 zusammen mit der Kugel VSK2 und der Ventilfeder VF in einem separaten Gehäuse als Baueinheit zusammengefasst werden. Dies bietet Vorteile in der Vormontage und Ventileinstellung. Hierzu wird die Baueinheit in das Jochgehäuse eingepresst. Zur Messung des Stößelhubes hat der Kugelanschlag eine Bohrung, um über einen Messstift den Weg der Kugel zu erfassen. Für eine sichere Verbindung der Baueinheit mit dem Magnetjoch bietet sich eine Speisung an. Zum Schutz der Ventilsitze VS1 und VS2 sind alle Verbindungen zum Bremskreis, Hauptbremszylinder und Wegsimulator mit Filtern F1, F2 und F3 geschützt.

Die Ventileinstellung erfolgt in der Weise, dass der Stößel ST zur Kugel VSK2 einen kleinen Abstand hat.

Zur Reduzierung der Spulenerwärmung kann die Erregerwicklung 5 mit dem Magnetgehäuse 9 vergossen werden. Zusätzlich kann auch ein verrippter Kühlkörper 10 vorgesehen werden.

### Bezugszeichenliste:

- 1: Pedal
- 2: Vorratsbehälter
- 3: Kolbenstößel
- 4: Magnetanker
- 4a: Anschlag des Magnetankers 4
- 5: Erregerwicklung
- 6: Magnetjoch
- 7, 7a: Bolzen
- 7, 7a: Bolzen
- AN1, AN2, AN3: Ventilanschlüsse
- BK1, BK2: erster und zweiter Bremskreis
- BP1, BP2: Trennventile
- DV: Druckversorgungseinrichtung
- F1, F2, F3: Filter
- F_{P}: Kraft durch Hydraulikdruck
- H: Hub des Magnetankers
- HV1: erste Hydraulikverbindung
- HV2: zweite Hydraulikverbindung
- K1, K2, K3: Ventilkammer
- HLi: Hydraulikleitungen
- MV, PD1, PD2: 3/2-Wegeventile
- PD1s, PD2s: Trennventil
- R1, R2: Arbeitsräume des Hauptbremszylinders
- SHZ/THZ: Single- bzw. Tandem-Hauptbremszylinder
- VF: Ventilfeder
- VS1, VS11: erster Ventilsitz
- VS2, VS22: zweiter Ventilsitz
- VSK11, VSK22: Ventilschließkörper
- WS: Wegsimulator
- MVs: Absperrventil

## Patentansprüche

1. Hydraulisches Betätigungssystem für ein Hydrauliksystem, insbesondere in Form eines Bremssystems, folgendes aufweisend:
- mindestens einen Hydraulikkreis (BK) mit mindestens einem hydraulischen Verbraucher, insbesondere in Form einer hydraulisch betätigten Radbremse,
- mindestens eine Druckerzeugungseinrichtung (DV) eine Pumpe aufweisend, insbesondere in Form einer Kolbenpumpe, die zur Drucksteuerung bzw. -regelung, insbesondere zum Druckauf- und Druckabbau (p_{auf}, p_{ab}), in dem mindestens einen Hydraulikkreis (BK1, BK2) dient,
**dadurch gekennzeichnet, dass** die Druckerzeugungseinrichtung (DV) mittels mindestens einem gesteuerten 3/2-Wege-Ventil (PD1, PD2) mit einem Vorratsbehältnis (VB) wahlweise verbindbar oder von diesem abkoppelbar ist.

2. Hydraulisches Betätigungssystem nach Anspruch 1, **dadurch gekennzeichnet, dass** die Druckversorgungseinrichtung (DV) eine Kolbenpumpe, insbesondere mit einem Plungerkolben oder Doppelhubkolben und mindestens einem Arbeitsraum (KV, KH), aufweist, und dass dem einen ersten Arbeitsraum (KV) ein erstes gesteuertes 3/2-Wege-Ventil (PD1) zugeordnet ist, wobei mittels des ersten gesteuerten 3/2-Wege-Ventils (PD1) entweder der erste Arbeitsraum (KV) mit einem ersten Hydraulikkreis (BK1) oder mit dem Vorratsbehältnis (VB) verbindbar ist.

3. Hydraulisches Betätigungssystem nach Anspruch 2, **dadurch gekennzeichnet, dass** die Druckerzeugungseinrichtung (DV) einen Doppelhubkolben (DHK) aufweist, welcher den einen ersten und den einen zweiten Arbeitsraum (KV, KH) abdichtend voneinander trennt, und dass dem einen zweiten Arbeitsraum (KH) ein zweites gesteuertes 3/2-Wege-Ventil (PD2) zugeordnet ist, wobei mittels des zweiten gesteuerten 3/2-Wege-Ventils (PD2) entweder der zweite Arbeitsraum (KH) mit einem zweiten Hydraulikkreis (BK2) oder mit dem Vorratsbehältnis (VB) verbindbar ist.

4. Hydraulisches Betätigungssystem nach Anspruch 2, **dadurch gekennzeichnet, dass** dem einen zweiten Arbeitsraum (KR) ein zweites gesteuertes Schaltventil (PD2s) zugeordnet ist, welches ein 2/2-Wegeventil ist, über das der zweite Arbeitsraum (KH) wahlweise mit dem zweiten Hydraulikkreis (BK2) verbindbar oder von diesem abtrennbar ist.

5. Hydraulisches Betätigungssystem nach einem der Ansprüche 1 bis 4, **dadurch gekennzeichnet, dass** ein Kreistrennventil (KTR) zur wahlweisen hydraulischen Verbindung oder Trennung der beiden Hydraulikkreise (BK1, BK2) vorgesehen ist, welches insbesondere zur Öffnung bzw. Absperrung einer die beiden Hydraulikkreise (BK1, BK2) miteinander verbindenden Hydraulikleitung (HL1-2) dient.

6. Hydraulisches Betätigungssystem nach Anspruch 5, **dadurch gekennzeichnet, dass** ein weiteres Kreistrennventil (KTRs) in Reihe zum Kreistrennventil (KTR) in der Hydraulikleitung (HL1-2) angeordnet ist.

7. Hydraulisches Betätigungssystem nach Anspruch 1, **dadurch gekennzeichnet, dass** die Druckerzeugungseinrichtung (DV) einen Doppelhubkolben (DHK) aufweist, welcher den einen ersten und den einen zweiten Arbeitsraum (KV, KH) abdichtend voneinander trennt, und dass stets mindestens einer der beiden Arbeitsräume (KV, KH) der Druckerzeugungseinrichtung (DV) mittels eines gesteuerten 3/2-Wege-Ventils (PD1) mit einem Vorratsbehältnis (VB) verbunden ist.

8. Hydraulisches Betätigungssystem nach Anspruch 7, **dadurch gekennzeichnet, dass** in einer Zwischenstellung des gesteuerten 3/2-Wege-Ventils (PD1) gleichzeitig beide Arbeitsräume (KV, KH) der Druckerzeugungseinrichtung (DV) mit dem Vorratsbehältnis (VB) verbunden sind.

9. Hydraulisches Betätigungssystem nach Anspruch 7 oder 8, **dadurch gekennzeichnet, dass** die Druckerzeugungseinrichtung (DV) einen Doppelhubkolben (DHK) aufweist, welcher die beiden Arbeitsräume (KV, KH) voneinander abdichtend trennt, wobei eine erste Hydraulikleitung (HL1), den einen ersten Arbeitsraum (KV) mit einem ersten Ventilanschluss (AN1) des gesteuerten 3/2-Wege-Ventils (MV) verbindet, und dass eine zweite Hydraulikleitung (HL2), den einen zweiten Arbeitsraum (KV) mit einem zweiten Ventilanschluss (AN2) des gesteuerten 3/2-Wege-Ventils (PD1) verbindet, und dass der dritte Ventilanschluss (AN3) des gesteuerten 3/2-Wege-Ventils (PD1) über eine dritte Hydraulikleitung (HL3) mit dem Vorratsbehältnis (VB) in Verbindung ist

10. Hydraulisches Betätigungssystem nach Anspruch 9, **dadurch gekennzeichnet, dass** in einer ersten Ventilstellung des gesteuerten 3/2-WegeVentils (PD1) nur dessen erster Ventilanschluss (AN1) mit dem dritten Ventilanschluss (AN3) in hydraulischer Verbindung ist, und dass in einer zweiten, insbesondere bestromten, Ventilstellung des gesteuerten 3/2-Wege-Ventils (PD1) nur dessen zweiter Ventilanschluss (AN2) mit dem dritten Ventilanschluss (AN3) in hydraulischer Verbindung ist, wobei insbesondere in den Stellungen zwischen der ersten und der zweiten Ventilstellung alle drei Ventilanschlüsse (AN1, AN2, AN3) des gesteuerten 3/2-Wege-Ventils (PD1) miteinander hydraulisch verbunden sind.

11. Hydraulisches Betätigungssystem nach einem der Ansprüche 7 bis 10, **dadurch gekennzeichnet, dass** ein erstes gesteuertes Schaltventil (PD1s) zur wahlweisen hydraulischen Verbindung der ersten Hydraulikleitung (HL1) bzw. der zweiten Arbeitskammer (KH) mit einem ersten Hydraulickreis (BK1) dient, insbesondere die erste Hydraulikleitung (HL1) über eine vierte Hydraulikleitung (HL4) mit dem ersten Hydraulikkreis (BK1) verbunden ist, wobei das erste gesteuerte Schaltventil (PD1s) zur wahlweisen Absperrung oder Öffnung der vierten Hydraulikleitung (HL4) dient.

12. Hydraulisches Betätigungssystem nach einem der Ansprüche 7 bis 11, **dadurch gekennzeichnet, dass** ein zweites gesteuertes Schaltventil (PD2s) zur wahlweisen hydraulischen Verbindung der zweiten Hydraulikleitung (HL2) bzw. der ersten Arbeitskammer (KV) mit einem zweiten Hydraulikkreis (BK2) dient, insbesondere die zweite Hydraulikleitung (HL2) über eine fünfte Hydraulikleitung (HL5) mit dem zweiten Hydraulickreis (BK2) verbunden ist, wobei das zweite gesteuerte Schaltventil (PD2s) zur wahlweisen Absperrung oder Öffnung der fünften Hydraulikleitung (HL5) dient.

13. Hydraulisches Betätigungssystem nach einem der Ansprüche 11 oder 12, **dadurch gekennzeichnet, dass** über ein drittes gesteuertes Schaltventil (KTV) beide Hydraulikkreise (BK1, BK2) hydraulisch miteinander verbindbar bzw. voneinander trennbar sind.

14. Hydraulisches Betätigungssystem nach einem der vorhergehenden Ansprüche, **dadurch gekennzeichnet, dass** entweder
die Druckerzeugungseinrichtung (DV) über mindestens ein Ansaugventil (SV1, SV2) in mindestens eine Arbeitskammer (KV, KH) Hydraulikmedium aus einem bzw. dem Vorratsbehältnis (VB) ansaugen kann und/oder
mittels des Doppelhubkolbens (DHK) sowohl bei Vor- als auch bei Rückhub ein Druck oder eine Kolbenposition einregelbar oder einstellbar ist
und/oder
in der Verbindungsleitung () welche das Ventil (MV) mit dem Vorratsbehälter (VB) verbindet ein, insbesondere stromlos offenes, Sicherheitsabsperrventil (MVs) angeordnet ist, welches insbesondere bei Fehlfunktion und/oder Undichtigkeit des Ventils (MV) die hydraulische Verbindung zwischen Vorratsbehälter (VB) und Ventil (MV) trennt.

15. Bremssystem mit einem hydraulischen Betätigungssystem nach einem der vorhergehenden Ansprüche, mit mindestens einem Bremskreis (BK1, BK2) in dem jeweils mindestens eine hydraulisch wirkende Radbremse angeordnet ist.

## Claims

1. Hydraulic actuation system for a hydraulic system, in particular in the form of a brake system, comprising:
- at least one hydraulic circuit (BK) with at least one hydraulic consumer, in particular in the form of a hydraulically actuated wheel brake,
- at least one pressure generating device (DV) comprising a pump, in particular in the form of a piston pump, which is suitable for pressure control or regulation, in particular for pressure build-up and pressure reduction (pᵤₚ , p_{down} ), in the at least one hydraulic circuit (BK1, BK2),
**characterized in that** the pressure generating device (DV) can be selectively connected to or disconnected from a reservoir (VB) by means of at least one controlled 3/2-way valve (PD1, PD2).

2. Hydraulic actuating system according to claim 1, **characterized in that** the pressure supply device (DV) has a piston pump, in particular with a plunger piston or double-stroke piston and at least one working chamber (KV, KH), and that a first controlled 3/2-way valve (PD1) is assigned to the first working chamber (KV), whereby the first controlled 3/2-way valve (PD1) can be used to connect either the first working chamber (KV) to a first hydraulic circuit (BK1) or to the reservoir (VB).

3. Hydraulic actuating system according to claim 2, **characterized in that** the pressure generating device (DV) has a double-acting piston (DHK) which seals off the first and second working chambers (KV, KH) from each other, and that a second controlled 3/2-way valve (PD2) is assigned to the second working chamber (KH), whereby the second working chamber (KH) can be connected either to a second hydraulic circuit (BK2) or to the reservoir (VB) by means of the second controlled 3/2-way valve (PD2).

4. Hydraulic actuating system according to claim 2, **characterized in that** a second controlled switching valve (PD2s) is assigned to the one second working chamber (KR), which is a 2/2-way valve via which the second working chamber (KH) can be selectively connected to or disconnected from the second hydraulic circuit (BK2).

5. Hydraulic actuating system according to one of claims 1 to 4, **characterized in that** a circuit isolating valve (KTR) is provided for selectively hydraulically connecting or disconnecting the two hydraulic circuits (BK1, BK2), which serves in particular to open or close a hydraulic line (HL1-2) connecting the two hydraulic circuits (BK1, BK2) to each other.

6. Hydraulic actuation system according to claim 5, **characterized in that** a further circuit isolating valve (KTRs) is arranged in series with the circuit isolating valve (KTR) in the hydraulic line (HL1-2).

7. Hydraulic actuating system according to claim 1, **characterized in that** the pressure generating device (DV) has a double-stroke piston (DHK) which seals off the first and second working chambers (KV, KH) from each other, and that at least one of the two working chambers (KV, KH) of the pressure generating device (DV) is always connected to a reservoir (VB) by means of a controlled 3/2-way valve (PD1).

8. Hydraulic actuating system according to claim 7, **characterized in that**, in an intermediate position of the controlled 3/2-way valve (PD1), both working chambers (KV, KH) of the pressure generating device (DV) are connected to the reservoir (VB) at the same time.

9. Hydraulic actuating system according to claim 7 or 8, **characterized in that** the pressure generating device (DV) has a double-acting piston (DHK) which seals off the two working chambers (KV, KH) from each other, wherein a first hydraulic line (HL1) connects one working chamber (KV) to a first valve connection (AN1) of the controlled 3/2-way valve (MV), and that a second hydraulic line (HL2) connects one second working chamber (KV) to a second valve connection (AN2) of the controlled 3/2-way valve (PD1), and that the third valve connection (AN3) of the controlled 3/2-way valve (PD1) is connected to the reservoir (VB) via a third hydraulic line (HL3).

10. Hydraulic actuating system according to claim 9, **characterized in that** in a first valve position of the controlled 3/2-way valve (PD1), only its first valve connection (AN1) is in hydraulic connection with the third valve connection (AN3), and that in a second, in particular energized, valve position of the controlled 3/2-way valve (PD1), only its second valve connection (AN2) is hydraulically connected to the third valve connection (AN3), whereby, in particular in the positions between the first and second valve positions, all three valve connections (AN1, AN2, AN3) of the controlled 3/2-way valve (PD1) are hydraulically connected to each other.

11. Hydraulic actuating system according to one of claims 7 to 10, **characterized in that** a first controlled switching valve (PD1s) serves to selectively hydraulically connect the first hydraulic line (HL1) or the second working chamber (KH) to a first hydraulic circuit (BK1), in particular the first hydraulic line (HL1) is connected to the first hydraulic circuit (BK1) via a fourth hydraulic line (HL4), wherein the first controlled switching valve (PD1s) serves to selectively shut off or open the fourth hydraulic line (HL4).

12. Hydraulic actuating system according to one of claims 7 to 11, **characterized in that** a second controlled switching valve (PD2s) serves to selectively hydraulically connect the second hydraulic line (HL2) or the first working chamber (KV) to a second hydraulic circuit (BK2), in particular the second hydraulic line (HL2) is connected to the second hydraulic circuit (BK2) via a fifth hydraulic line (HL5), wherein the second controlled switching valve (PD2s) serves to selectively shut off or open the fifth hydraulic line (HL5).

13. Hydraulic actuating system according to one of claims 11 or 12, **characterized in that** both hydraulic circuits (BK1, BK2) can be hydraulically connected to or disconnected from each other via a third controlled switching valve (KTV).

14. Hydraulic actuation system according to one of the preceding claims,
**characterized in that** either
the pressure generating device (DV) can draw hydraulic fluid from one or more supply containers (VB) into at least one working chamber (KV, KH) via at least one suction valve (SV1, SV2)
and/or
a pressure or piston position can be regulated or adjusted by means of the double-stroke piston (DHK) during both the forward and return strokes
and/or
a safety shut-off valve (MVs), which is open when de-energized, is arranged in the connecting line () connecting the valve (MV) to the reservoir (VB), which disconnects the hydraulic connection between the reservoir (VB) and the valve (MV), in particular in the event of a malfunction and/or leakage of the valve (MV).

15. Brake system with a hydraulic actuation system according to one of the preceding claims, with at least one brake circuit (BK1, BK2) in which at least one hydraulically acting wheel brake is arranged in each case.

## Revendications

1. Système d'actionnement hydraulique pour un système hydraulique, en particulier sous la forme d'un système de freinage, présentant ce qui suit :
- au moins un circuit hydraulique (BK) avec au moins un consommateur hydraulique, en particulier sous la forme d'un frein de roue à actionnement hydraulique,
- au moins un dispositif de production de pression (DV) présentant une pompe, en particulier sous la forme d'une pompe à piston, qui sert à commander ou réguler la pression, en particulier à augmenter et baisser la pression (p_{auf}, p_{ab}), dans le au moins un circuit hydraulique (BK1, BK2),
**caractérisé en ce que** le dispositif de production de pression (DV) peut être sélectivement relié à un récipient de stockage (VB) ou être désaccouplé de celui-ci au moyen d'au moins une vanne 3/2 voies (PD1, PD2) commandée.

2. Système d'actionnement hydraulique selon la revendication 1, **caractérisé en ce que** le dispositif d'alimentation en pression (DV) présente une pompe à piston, en particulier avec un piston plongeur ou piston à double effet et au moins un espace de travail (KV, KH), et qu'une première vanne 3/2 voies (PD1) commandée est associée au un premier espace de travail (KV), dans lequel soit le premier espace de travail (KV) peut être relié à un premier circuit hydraulique (BK1) soit au récipient de stockage (VB) au moyen de la première vanne 3/2 voies (PD1) commandée.

3. Système d'actionnement hydraulique selon la revendication 2, **caractérisé en ce que** le dispositif de production de pression (DV) présente un piston à double effet (DHK), lequel sépare le un premier et le un deuxième espace de travail (KV, KH) l'un de l'autre de manière étanche, et qu'une deuxième vanne 3/2 voies (PD2) commandée est associée au un deuxième espace de travail (KH), dans lequel soit le deuxième espace de travail (KH) peut être relié à un deuxième circuit hydraulique (BK2) soit au récipient de stockage (VB) au moyen de la deuxième vanne 3/2 voies (PD2) commandée.

4. Système d'actionnement hydraulique selon la revendication 2, **caractérisé en ce qu'**une deuxième vanne de commutation (PD2s) commandée, laquelle est une vanne 2/2 voies, par l'intermédiaire de laquelle le deuxième espace de travail (KH) peut être sélectivement relié au deuxième circuit hydraulique (BK2) ou séparé de celui-ci, est associée au un deuxième espace de travail (KR).

5. Système d'actionnement hydraulique selon l'une quelconque des revendications 1 à 4, **caractérisé en ce qu'**une vanne de séparation de circuit (KTR), laquelle sert en particulier à ouvrir ou fermer une conduite hydraulique (HL1-2) reliant les deux circuits hydrauliques (BK1, BK2) entre eux, est prévue pour la liaison ou séparation hydraulique sélective des deux circuits hydrauliques (BK1, BK2).

6. Système d'actionnement hydraulique selon la revendication 5, **caractérisé en ce qu'**une autre vanne de séparation de circuit (KTRs) est disposée en série par rapport à la vanne de séparation de circuit (KTR) dans la conduite hydraulique (HL1-2).

7. Système d'actionnement hydraulique selon la revendication 1, **caractérisé en ce que** le dispositif de production de pression (DV) présente un piston à double effet (DHK), lequel sépare le un premier et le un deuxième espace de travail (KV, KH) l'un de l'autre de manière étanche, et qu'au moins l'un des deux espaces de travail (KV, KH) du dispositif de production de pression (DV) est relié en permanence à un récipient de stockage (VB) au moyen d'une vanne 3/2 voies (PD1) commandée.

8. Système d'actionnement hydraulique selon la revendication 7, **caractérisé en ce que** dans une position intermédiaire de la vanne 3/2 voies (PD1) commandée deux espaces de travail (KV, KH) du dispositif de production de pression (DV) sont reliés simultanément au récipient de stockage (VB).

9. Système d'actionnement hydraulique selon la revendication 7 ou 8, **caractérisé en ce que** le dispositif de production de pression (DV) présente un piston à double effet (DHK), lequel sépare les deux espaces de travail (KV, KH) l'un de l'autre de manière étanche, dans lequel une première conduite hydraulique (HL1) relie le un premier espace de travail (KV) à un premier raccord de vanne (AN1) de la vanne 3/2 voies (MV) commandée, et qu'une deuxième conduite hydraulique (HL2) relie le un deuxième espace de travail (KV) à un deuxième raccord de vanne (AN2) de la vanne 3/2 voies (PD1) commandée, et que le troisième raccord de vanne (AN3) de la vanne 3/2 voies (PD1) commandée est en liaison avec le récipient de stockage (VB) par l'intermédiaire d'une troisième conduite hydraulique (HL3).

10. Système d'actionnement hydraulique selon la revendication 9, **caractérisé en ce que** dans une première position de vanne de la vanne 3/2 voies (PD1) commandée seul le premier raccord de vanne (AN1) de celle-ci est en liaison hydraulique avec le troisième raccord de vanne (AN3), et que dans une deuxième position de vanne, en particulier alimentée en courant, de la vanne 3/2 voies (PD1) commandée seul le deuxième raccord de vanne (AN2) de celle-ci est en liaison hydraulique avec le troisième raccord de vanne (AN3), dans lequel en particulier dans les positions entre la première et la deuxième position de vanne les raccords de vanne (AN1, AN2, AN3) de la vanne 3/2 voies (PD1) commandée sont tous les trois reliés hydrauliquement entre eux.

11. Système d'actionnement hydraulique selon l'une quelconque des revendications 7 à 10, **caractérisé en ce qu'**une première vanne de commutation (PD1s) commandée sert à la liaison hydraulique sélective de la première conduite hydraulique (HL1) ou de la deuxième chambre de travail (KH) avec un premier circuit hydraulique (BK1), en particulier la première conduite hydraulique (HL1) est reliée au premier circuit hydraulique (BK1) par l'intermédiaire d'une quatrième conduite hydraulique (HL4), dans lequel la première vanne de commutation (PD1s) commandée sert à fermer ou ouvrir sélectivement la quatrième conduite hydraulique (HL4).

12. Système d'actionnement hydraulique selon l'une quelconque des revendications 7 à 11, **caractérisé en ce qu'**une deuxième vanne de commutation (PD2s) commandée sert à la liaison hydraulique sélective de la deuxième conduite hydraulique (HL2) ou de la première chambre de travail (KV) avec un deuxième circuit hydraulique (BK2), en particulier la deuxième conduite hydraulique (HL2) est reliée au deuxième circuit hydraulique (BK2) par l'intermédiaire d'une cinquième conduite hydraulique (HL5), dans lequel la deuxième vanne de commutation (PD2s) commandée sert à fermer ou ouvrir sélectivement la cinquième conduite hydraulique (HL5).

13. Système d'actionnement hydraulique selon l'une quelconque des revendications 11 ou 12, **caractérisé en ce que** les deux circuits hydrauliques (BK1, BK2) peuvent être reliés hydrauliquement entre eux ou séparés l'un de l'autre par l'intermédiaire d'une troisième vanne de commutation (KTV) commandée.

14. Système d'actionnement hydraulique selon l'une quelconque des revendications précédentes, **caractérisé en ce que** soit
le dispositif de production de pression (DV) peut aspirer le fluide hydraulique d'un ou du récipient de stockage (VB) par l'intermédiaire d'au moins une vanne d'aspiration (SV1, SV2) dans au moins une chambre de travail (KV, KH)
et/ou
une pression ou une position de piston peut être régulée ou peut être réglée au moyen du piston à double effet (DHK) aussi bien lors de la course aller que lors de la course retour
et/ou
une vanne d'arrêt de sécurité (MVs), en particulier normalement ouverte, laquelle rompt la liaison hydraulique entre le récipient de stockage (VB) et la vanne (MV) en particulier lors d'un dysfonctionnement et/ou défaut d'étanchéité de la vanne (MV), est disposée dans la conduite de liaison (), laquelle relie la vanne (MV) au récipient de stockage (VB).

15. Système de freinage avec un système d'actionnement hydraulique selon l'une quelconque des revendications précédentes, avec au moins un circuit de freinage (BK1, BK2) dans lequel est disposé respectivement au moins un frein de roue à action hydraulique.
